# EUROPEAN PATENT APPLICATION

(11) **EP 4 481 297 A1**
(43) Date of publication of application: **25.12.2024**
(21) Application number: 24182507.4
(22) Date of filing: 17.06.2024
(51) Int. Cl.: F24S 20/66, F24S 40/55, H02S 40/42

(54) **HEAT RECOVERY SYSTEM FOR TUBULAR PHOTOVOLTAIC MODULES**

(30) Priority: 22.06.2023 GB 202309465
(71) Applicant: Tipa Tech Limited, Watford WD25 9XX (GB)
(72) Inventor: BUDHDEO, Shamir Pravinchandra, Watford, WD25 9XX (GB)
(74) Representative: Valet Patent Services Limited

(57) **Abstract**

The present invention provides a heat recovery system (100) for tubular photovoltaic modules (10). The system comprises at least one composite wall (110) having an inner surface (112), outer surface (114), a top end (116), and a bottom end (118). Additionally, the system includes at least one thermal connector (120) thermally coupled with the inner surface (112) of the composite wall (110), and at least one heat extracting coil (130) thermally coupled with the thermal connector (120).

## Description

### FIELD OF THE INVENTION

The present invention relates to heat recovery systems for tubular photovoltaic modules, and more particularly, to a heat recovery system comprising composite walls, thermal connectors, and heat extracting coils to enhance the heat recovery efficiency of tubular photovoltaic modules.

### BACKGROUND OF THE INVENTION

Photovoltaic modules are widely used to convert solar energy into electricity. Tubular photovoltaic modules are a specific type of photovoltaic modules that offer improved efficiency by capturing sunlight from various angles. However, during operation, tubular photovoltaic modules generate heat, which can reduce their overall efficiency. Therefore, there is a need for an efficient heat recovery system that can effectively extract and utilize the heat generated by tubular photovoltaic modules.

### OBJECTS

Some of the objects of the present disclosure, which at least one embodiment herein satisfies, are as follows:

An object of the present disclosure is to ameliorate one or more problems of the prior art or to at least provide a useful alternative.

Another object of the present disclosure is to provide heat recovery systems.

Yet another object of the present disclosure is to provide a heat recovery systems for tubular photovoltaic modules.

Other objects and advantages of the present disclosure will be more apparent from the following description, which is not intended to limit the scope of the present disclosure.

### SUMMARY OF THE INVENTION

The present invention provides a heat recovery system for tubular photovoltaic modules. The system comprises at least one composite wall having an inner surface, outer surface, a top end, and a bottom end. Additionally, the system includes at least one thermal connector thermally coupled with the inner surface of the composite wall, and at least one heat extracting coil thermally coupled with the thermal connector.

In one embodiment of the invention, the inner surface of the composite wall is thermally conductive and electrically non-conductive. This ensures efficient heat transfer from the tubular photovoltaic modules to the thermal connector while maintaining electrical isolation.

In another embodiment, the outer surface of the composite wall is thermally non-conductive. This prevents heat loss to the surroundings and improves the overall heat recovery efficiency of the system.

**The** composite wall can be composed of various materials. In one embodiment, the composite wall is composed of aluminium nitride (AlN) and a polymer. The polymer can be selected from high-density polyethylene (HOPE), low-density polyethylene (LDPE), acrylonitrile butadiene (ABS), or a combination thereof. The use of aluminium nitride in the composite wall enhances its thermal conductivity, while the polymer provides mechanical strength and flexibility.

Alternatively, the composite wall can be composed of mica and a polymer. Mica offers exmoduleent thermal insulation properties, while the polymer provides structural integrity and durability to the composite wall.

In a further embodiment, the thermal conductivity of the composite wall gradually decreases from the inner surface to the outer surface. This gradient in thermal conductivity allows for efficient heat transfer from the tubular photovoltaic modules to the thermal connector, while minimizing heat loss to the surroundings.

The heat extracting coil is thermally coupled to the thermal connector and carries a working fluid, which can be selected from butane, ammonia, or R32. The working fluid absorbs the heat transferred from the tubular photovoltaic modules and carries it to other components of the system for utilization or dissipation.

In one embodiment, the heat extracting coil is fluidically coupled with a pump for circulation of the working fluid. The pump ensures the continuous flow of the working fluid through the heat extracting coil, facilitating efficient heat transfer.

Additionally, the heat extracting coil can be thermally coupled to a heat exchanger. The heat exchanger further enhances the heat recovery efficiency by facilitating the transfer of heat from the working fluid to another medium, such as air or water, for utilization in various applications.

### BREIF DESCRIPTION OF DRAWINGS

FIG. 1 is a perspective view of the heat recovery system for tubular photovoltaic modules according to an embodiment of the present invention.
FIG. 2 is a schematic representation of the heat recovery system for tubular photovoltaic modules according to an embodiment of the present invention.

### DETAILED DESCRIPTION OF THE INVENTION

Embodiments are provided so as to thoroughly and fully convey the scope of the present disclosure to the person skilled in the art. Numerous details are set forth, relating to specific components, and methods, to provide a complete understanding of embodiments of the present disclosure. It will be apparent to the person skilled in the art that the details provided in the embodiments should not be construed to limit the scope of the present disclosure. In some embodiments, well-known processes, well-known apparatus structures, and well-known techniques are not described in detail.

The terminology used in the present disclosure is only for the purpose of explaining a particular embodiment and such terminology shall not be considered to limit the scope of the present disclosure. As used in the present disclosure, the forms "a," "an," and "the" may be intended to include the plural forms as well, unless the context clearly suggests otherwise. The terms "comprises," "comprising," "including," and "having," are open-ended transitional phrases and therefore specify the presence of stated features, integers, steps, operations, elements, modules, units and/or components, but do not forbid the presence or addition of one or more other features, integers, steps, operations, elements, components, and/or groups thereof. The particular order of steps disclosed in the method and process of the present disclosure is not to be construed as necessarily requiring their performance as described or illustrated. It is also to be understood that additional or alternative steps may be employed.

The terms first, second, third, etc., should not be construed to limit the scope of the present disclosure as the aforementioned terms may be only used to distinguish one element, component, region, layer or section from another component, region, layer or section. Terms such as first, second, third, etc., when used herein do not imply a specific sequence or order unless clearly suggested by the present disclosure.

The following detailed description provides a more complete understanding of the invention, including various embodiments thereof.

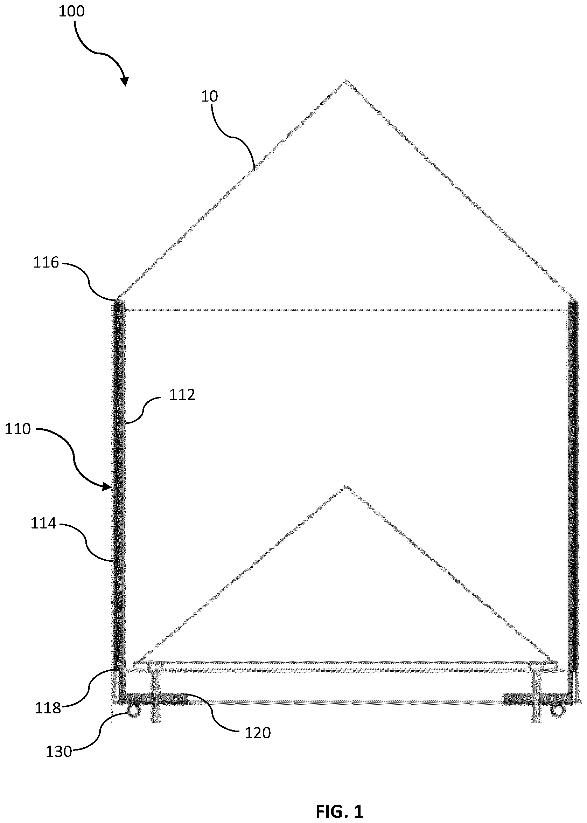

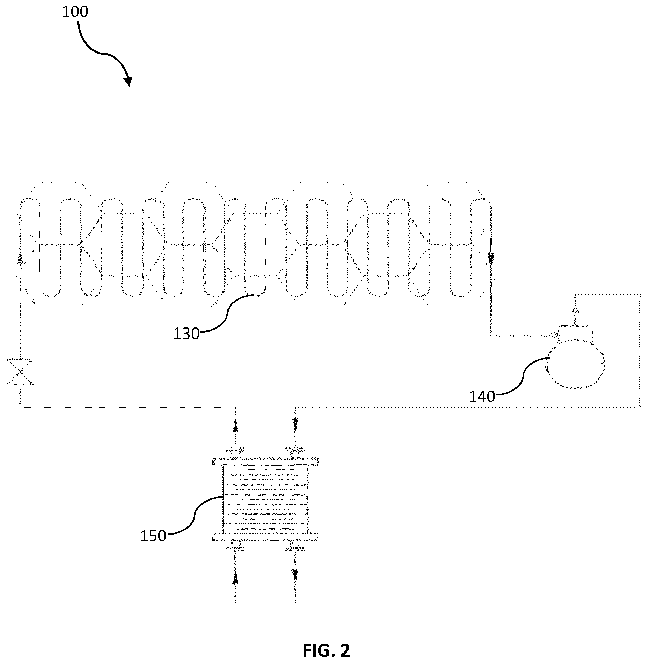

Referring to FIG. 1 and FIG. 2, a heat recovery system 100 for tubular photovoltaic modules is shown. The system 100 comprises at least one composite wall 110, at least one thermal connector 120, and at least one heat extracting coil 130.

**The** composite wall 110 has an inner surface 112, an outer surface 114, a top end 116, and a bottom end 118. In one embodiment, the composite wall 110 is composed of aluminium nitride (AlN) and a polymer. The polymer can be selected from high-density polyethylene (HOPE), low-density polyethylene (LDPE), acrylonitrile butadiene (ABS), or a combination thereof. Alternatively, the composite wall 110 can be composed of mica and a polymer.

The inner surface 112 of the composite wall 110 is thermally conductive and electrically non-conductive, allowing efficient heat transfer from the tubular photovoltaic modules to the thermal connector 120, while maintaining electrical isolation.

The outer surface 114 of the composite wall 110 is thermally non-conductive, preventing heat loss to the surroundings and improving the overall heat recovery efficiency of the system 100.

The thermal connector 120 is thermally coupled with the inner surface 112 of the composite wall 110, enabling the transfer of heat from the composite wall 110 to the heat extracting coil 130.

The heat extracting coil 130 is thermally coupled to the thermal connector 120 and carries a working fluid selected from butane, ammonia, or R32. The working fluid absorbs the heat transferred from the tubular photovoltaic modules and carries it to other components of the system 100 for utilization or dissipation.

In one embodiment, the heat extracting coil 130 is fluidically coupled with a pump 140 for circulation of the working fluid. The pump 140 ensures the continuous flow of the working fluid through the heat extracting coil 130, facilitating efficient heat transfer.

Additionally, the heat extracting coil 130 is thermally coupled to a heat exchanger 150. The heat exchanger 150 further enhances the heat recovery efficiency by facilitating the transfer of heat from the working fluid to another medium, such as air or water, for utilization in various applications.

In one aspect of the invention, the thermal conductivity of the composite wall 110 gradually decreases from the inner surface 112 to the outer surface 114. This gradient in thermal conductivity allows for efficient heat transfer from the tubular photovoltaic modules to the thermal connector 120, while minimizing heat loss to the surroundings.

In an embodiment, the photovoltaic module is air tight and an inert gas is provided inside the photovoltaic module to increase the rate of heat transfer by convection of inert gases. The inert gas is selected from nitrogen or noble gases.

### TECHNICAL ADVANCEMENTS

The present disclosure described hereinabove has several technical advantages including, but not limited to, a heat recovery system. The technical advancements are that the heat recovery system recovers all the heat trapped inside a tubular photovoltaic module and increases the efficiency of the photovoltaic module.

The described embodiments are illustrative of the invention and are not intended to limit the scope of the invention. Various modifications and changes may be made to the embodiments described above without departing from the scope of the invention, which is defined by the claims set forth below.

### LIST OF REFRENCE NUMERALS

| | | |
|---|---|---|
| 100 | : | Heat recovery system |
| 10 | : | Tubular photovoltaic module |
| 110 | : | Composite wall |
| 112 | : | Inner surface |
| 114 | : | Outer surface |
| 116 | : | Top end |
| 118 | : | Bottom end |
| 120 | : | Thermal connector |
| 130 | : | Heat extracting coil |
| 140 | : | Pump |
| 150 | : | Heat exchanger |

## Claims

1. A heat recovery system 100 for tubular photovoltaic module 10, wherein the system 100 comprises:
at least one composite wall 110 having an inner surface 112, an outer surface 114, a top end 116, and a bottom end 118;
at least one thermal connector 120 thermally coupled with the inner surface 112 of the composite wall 110; and
at least one heat extracting coil 130 thermally coupled with the thermal connector 120.

2. The heat recovery system 100 as claimed in claim 1, wherein the inner surface 112 of the composite wall 110 is thermally conductive and electrically non-conductive.

3. The heat recovery system 100 as claimed in claim 1, wherein the outer surface 114 of the composite wall 110 is thermally non-conductive.

4. The heat recovery system 100 as claimed in claim 1, wherein the composite wall 110 is composed of aluminium nitride (AlN) and a polymer.

5. The heat recovery system 100 as claimed in claim 4, wherein the polymer is selected from high-density polyethylene (HOPE), low-density polyethylene (LDPE), acrylonitrile butadiene (ABS), or a combination thereof.

6. The heat recovery system 100 as claimed in claim 1, wherein the composite wall 110 is composed of mica and a polymer.

7. The heat recovery system 100 as claimed in claim 1, wherein the thermal conductivity of the composite wall 110 gradually decreases from the inner surface 112 to the outer surface 114.

8. The heat recovery system 100 as claimed in claim 1, wherein the heat extracting coil 130 carries a working fluid selected from butane, ammonia, and R32.

9. The heat recovery system 100 as claimed in claim 8, wherein the heat extracting coil 130 is fluidically coupled with a pump 140 for circulation of the working fluid.

10. The heat recovery system 100 as claimed in claim 1, wherein the heat extracting coil 130 is thermally coupled to a heat exchanger 150.
